(19)

Europäisches
Patentamt
European
Patent Office
Office européen
des brevets

(11) **EP 4 517 368 A1**

(12) **EUROPEAN PATENT APPLICATION**

(43) Date of publication:
**05.03.2025 Bulletin 2025/10**

(21) Application number: **23193743.4**

(22) Date of filing: **28.08.2023**

(51) International Patent Classification (IPC):
**G01S 7/40** *(2006.01)* **G01S 13/00** *(2006.01)*
**G01S 13/87** *(2006.01)* **G01S 13/931** *(2020.01)*

(52) Cooperative Patent Classification (CPC):
**G01S 13/003; G01S 7/40; G01S 7/4086;**
**G01S 13/87; G01S 13/931;** G01S 2013/93271;
G01S 2013/93275

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicants:
• **VOLKSWAGEN AG**
  **38440 Wolfsburg (DE)**
• **Fraunhofer-Gesellschaft zur Förderung**
  **der angewandten Forschung e.V.**
  **80686 München (DE)**

(72) Inventors:
• **Kurz, Heiko Gustav**
  **30177 Hannover (DE)**
• **Meinecke, Marc-Michael**
  **38524 Sassenburg (DE)**
• **Simoni, Renato**
  **53111 Bonn (DE)**
• **González-Huici, María Antonia**
  **53123 Bonn (DE)**
• **Greiff, Christian**
  **53179 Bonn (DE)**
• **Gisder, Thomas**
  **38446 Wolfsburg (DE)**

(54) **A METHOD FOR ESTIMATING CURRENT POSITIONS OF SENSOR ELEMENTS IN AN ARRAY SENSOR, A COMPUTER PROGRAM PRODUCT, A COMPUTER-READABLE STORAGE MEDIUM, AS WELL AS AN ARRAY SENSOR**

(57) The present invention relates to a method for estimating current positions (9) of sensor elements (10, 11, 12, 13) in an array sensor (3), comprising the steps of: Providing initial position estimates of the sensor elements (10, 11, 12, 13) by an electronic computing device (8) of the array sensor (3); Transmitting a sensor signal (14) in surroundings (15) of the array sensor (3) by a transmitting device (6) of the array sensor (3) and receiving a reflected sensor signal (16) by a receiving device (7) of the array sensor (3), wherein the sensor signal (14) is reflected on at least one calibration target (17, 16, 18, 19) in the surroundings (15); Determining at least a direction of arrival of the reflected signal (16) by the electronic computing device (8); Estimating a virtual position of each of the sensor elements (10, 11, 12, 13) analytically depending on the direction of arrival by the electronic computing device (8) based on a criterion of smallest residuum; and Estimating the current positions (9) depending on the virtual positions and the initial position estimates by the electronic computing device (8). Furthermore the invention relates to a computer program product, a computer-readable storage medium, as well as to an array sensor (3.)

Fig. 1

**Description**

The present invention relates to a method for estimating current positions of sensor elements in an array sensor according to the pending claim 1. Furthermore, the present invention relates to a computer program product, a computer-readable storage medium as well as to an array sensor.

Estimating the current positions of sensor elements in an array sensor is a well-known problem in the state of the art. In particular, for example for at least in part automated motor vehicles, it is important to know the sensor position very precise, in order to capture the surroundings in an improved manner and therefore controlling the motor vehicle very safe in the surroundings.

GP 2002 344 223 A1 provides a method of determining the position of an array antenna element for improving its output performance. An array antenna unit is equipped with a STAP controller and is provided with a first function which is obtained, by adding up the expectations of the squared absolute values of auto-correlation functions of the general impulse response of all the desired waves; a second function is obtained by adding up the expectations of the squared absolute values of cross-correlation functions between the general impulse response of all the desired waves and the general impulse response of all the interference waves; a third function is the sum of the first and second function, and a fourth function has a factor that is the positions (n-1) other antennas relatively determined with the position of an antenna element as reference; and an antenna position designing unit determines the position of n antenna elements, by calculating the positions of the other (n-1) antenna elements which reduces the fourth function to be minimal.

US 11, 005, 580 B2 discloses an array antenna calibration method and device, which is used for calibrating an array antenna in real time in an open calibration environment. The method includes: determining, on the basis of a preset direction angle of each preset beam direction, an initial beam weight vector matrix of an array antenna to be calibrated, and emitting, by a test antenna in a standard beam direction, a first calibration signal to the array antenna to be calibrated; determining, on the basis of the first calibration signal received by each channel of the array antenna to be calibrated, a magnitude-phase arrow between the first calibration signal received by a center channel and a first calibration signal received by each channel; and using the magnitude-phase arrow to calibrate the initial beam weight vector matrix, so as to obtain a compensation beam weight vector matrix.

According to the US 7, 714, 776 B2 an antenna array comprise a surface comprising a replicated pattern of conductive tracks, the tracks defining a plurality of ports. A plurality of antenna are located at ports distributed about the surface. A plurality of radiative transceivers are electrically connected to a respective antenna. A plurality of reference transceivers are electrically connected to a non-radiative impedance located at a respective port so that each reference transceiver is surrounded by a group of antenna and electrically coupled to the group of antenna by the tracks. At least one antenna from the at least one group of antenna belongs to one other group of antenna. Calibration circuitry includes a controller associated with each reference transceiver, each controller being arranged to transmit a calibration signal through an associated reference transceiver and to receive and store a received calibration signal from a selected transceiver for the group of antenna coupled to the reference transceiver. Each controller is further arranged to receive and store a calibration signal from the selected transceiver for the group of antenna coupled to the reference transceiver. The calibration circuitry further includes for each other transceiver for the group of antenna, circuitry for adjusting the phase and amplitude of signals transmitted and received by the radiative transceivers relative to the stored calibration signals for the selected radiative transceiver.

It is an object of the present invention to provide a method, a computer program product, a computer-readable storage medium as well as an array sensor, by which an improved estimating of current positions of sensor elements in the array sensor is provided.

This object is solved by a method, a computer program product, a computer-readable storage medium as well as an array sensor according to the independent claims. Advantageous embodiments are presented in the dependent claims.

One aspect of the invention relates to a method for estimating current positions of sensor elements in an array sensor. Initial position estimates of the sensor elements are provided by an electronic computing device of the array sensor. A sensor signal is transmitted in the surroundings of the array sensor by a transmitting device of the array sensor and a reflected sensor signal is received by a receiving device of the array sensor, wherein the sensor signal is reflected on at least one calibration target in the surroundings. At least a direction of arrival of the reflected signal is determined by the electronic computing device. A virtual position of each of the sensor elements is estimated analytically depending on the direction of arrival by the electronic computing device based on a criterion of smallest residuum. The current positions are estimated depending on the virtual positions and the initial position estimates by the electronic computing device.

Therefore, an analytical way for estimating current positions of sensor elements is provided. In particular, determining at least a direction of arrival of a reflected signal by the electronic computing device may be provided by the electronic computing device itself or other target localization devices/techniques.

In particular, the target of the invention is to estimate three-dimensional antenna positions and complex channel imbalances for measured range/Doppler/channel maps, for example at least with four disjoint calibration targets. In particular, when restricted to a subspace, a d-dimensional position estimate requires a number of d targets, plus one additional target, if also channel imbalances are to be estimated.

Targets can be in near-field, but the location should be ideally "known". The closer to the array, the more precise the range need to be known. In the far-field, only the direction of arrival (DoA) information suffices. In principle, an estimate of target location information can be obtained even with the sensor itself. The signal to noise ratio (SNR) is sufficiently high such that noise does not disturb the phases significantly.

Prior knowledge on antenna positions is required for successful outcome, ideally with accuracy of 3D error better than half of the operating wave length lambda/2.

The range of sets of peak shifts due to cable delays can also be compensated, but this task is independent from estimation of antenna position and channel imbalances. In a dynamic scene with moving platforms, range migration over ramps have to be compensated for first.

In particular, the method is analytical, in the sense that no costly numerical optimization is required.

In particular in the near-field case, it relies on some choice of "fudge factors", which are determined from prior knowledge of antenna positions and target locations. They are used to pre-transform the data in a way that eliminates unwanted terms in the bistatic range's tailor series, which prevent analytic treatment.

The derivation of the method assumes that the data samples are noise-free. It can of course still be applied to noisy data, although performance is presumable more sensitive to noise than other methods.

In particular, at least four reflected signals from at least four calibration targets are received. It is also possible, that less than four calibration targets may be used. In particular, a d-dimensional position estimate requires d targets, plus one additional, if also channel imbalances are to be estimated. Therefore, if for example a two-dimensional position estimate is computed, just two calibration targets are used. If the two-dimensional estimation is used and also the channel imbalances are used, at least three calibration targets are used. For the three-dimensional estimation three targets have to be used. If also the channel imbalances are estimated, four calibration targets are used. Therefore a precise estimation of the current positions is provided.

According to another embodiment additionally a distance to the at least one calibration target is provided and the virtual position is additionally determined depending on the provided distance. In particular, the distance can be provided externally. Therefore, depending on the distance, a precise estimating of the current sensor positions is realized.

In another embodiment additionally depending on the estimated current positions a channel imbalance of the antenna is determined. In particular depending on the estimated current positions, also channel imbalances of the array sensor are determined. Therefore, with the provided method, also the channel imbalances can be estimated and therefore counter measures for the channel imbalances can be determined.

In another embodiment the channel imbalance is determined by using a singular value decomposition algorithm. Therefore, a precise method is provided for determining the channel imbalance.

In another embodiment the channel imbalance is determined by using a higher-order singular value decomposition algorithm. Therefore, a precise method is provided for determining the channel imbalance.

According to another embodiment the initial positions are nominal positions. Therefore, a normalization of the data may be provided. Therefore, the normalization is performed to decouple the estimation of positions an imbalances.

In another embodiment the estimated virtual positions are bootstrapped as the initial positions. Therefore, a further calculating/estimating of the positions can be realized, in particular with a higher precision.

According to another embodiment the received signal is compensated concerning a phase contribution due to geometry from the received signal. Therefore, a more precise estimating of the current sensor positions is provided.

In another embodiment the sensor device is provided as a radar device and/or a communication device. Therefore, the sensor device can be used as a radar device and/or communication device. This has the advantage, that as well as for communicating, for example with a satellite, and/or for capturing surroundings of a motor vehicle the sensor device can be used.

In particular, the method is a computer-implemented method. Therefore, another aspect of the invention relates to a computer program product comprising program code means for performing a method according to the preceding aspect.

Furthermore, the invention relates to a computer-readable storage medium comprising at least the computer program product according to the preceding aspect.

A still further aspect of the invention relates to an array sensor, in particular to a sensor device and/or communication device for a motor vehicle or any kind of vehicle, comprising at least one transmitting device, one receiving device, and one electronic computing device, wherein the array sensor, in particular the sensor device and/or communication device is configured for performing a method according to the preceding aspect.

In particular, the method is performed by the sensor device and/or communication device.

A still further aspect of the invention relates to a motor vehicle comprising at least the sensor device and/or communication device according to the preceding aspect.

Advantageous embodiments of the method are to be regarded as advantageous embodiments of the computer program product, the computer-readable storage medium, the sensor device and/or communication device, and the motor vehicle. Therefore, the sensor device and/or communication device as well as the motor vehicle may comprise means for performing the method.

The invention also includes the control device/electronic computing device for the motor vehicle. The control device may comprise a data processing device or a processor device adapted to perform an embodiment of the method according to the invention. For this purpose, the processor device may comprise at least one microprocessor and/or at least one microcontroller and/or at least one FPGA (field programmable gate array) and/or at least one DSP (digital signal processor). In particular, a CPU (Central Processing Unit), a GPU (Graphical Processing Unit) or an NPU (Neural Processing Unit) can be used as the microprocessor in each case. Furthermore, the processor device may have program code which is set up to perform the embodiment of the method according to the invention when executed by the processor device. The program code may be stored in a data memory of the processor device. The processor device may be based, for example, on at least one circuit board and/or on at least one SoC (system on chip).

The motor vehicle according to the invention is preferably designed as a motor vehicle, in particular as a passenger car or truck, or as a passenger bus or motorcycle.

As a further solution, the invention also comprises a computer-readable storage medium comprising program code which, when executed by a computer or computer network, causes the computer or computer network to execute an embodiment of the method according to the invention. The storage medium may be provided at least in part as a non-volatile data storage (e.g., as a flash memory and/or as an SSD - solid state drive) and/or at least in part as a volatile data storage (e.g., as a RAM - random access memory). The storage medium may be arranged in the computer or computer network. However, the storage medium may also be operated, for example, as a so-called appstore server and/or cloud server on the Internet. A processor circuit with, for example, at least one microprocessor may be provided by the computer or computer network. The program code may be provided as binary code and/or as assembly code and/or as source code of a programming language (e.g. C) and/or as program script (e.g. Python).

The invention also encompasses combinations of the features of the described embodiments. Thus, the invention also encompasses realizations each having a combination of the features of more than one of the described embodiments, provided that the embodiments have not been described as mutually exclusive.

The drawings show in:

Fig. 1 a schematic top view according to an embodiment of a motor vehicle comprising an array sensor; and

Fig. 2 a schematic flow chart according to an embodiment of the method.

In the figures the same elements are comprising the same reference signs.

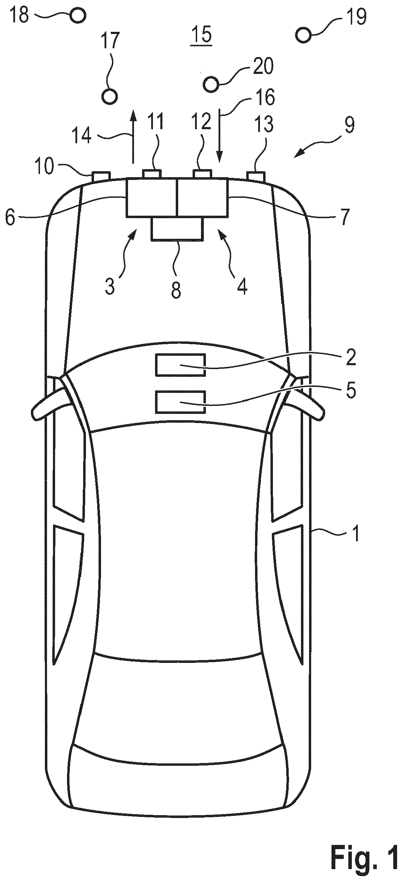

Fig. 1 shows a schematic top view according to an embodiment of a motor vehicle 1. The motor vehicle 1 may comprise an assistance system 2 for an at least in part assisted operation of the motor vehicle 1. Furthermore, the motor vehicle 1 may comprise an array sensor 3, in particular for the assistance system 2. The array sensor 3 may be configured as a sensing device 4, as shown in Fig. 1 and/or as a communication device 5. The array sensor 3 may comprise at least one transmitting device 6, one receiving device 7, and one electronic computing device 8.

According to an embodiment of the method initial position estimate 9 of a sensor element 10, 11, 12, 13 of the array sensor 3 are provided by the electronic computing device 8. As shown in Fig. 1, the array sensor 3 may comprise a first sensor element 10, a second sensor element 11, a third sensor element 12, as well as a fourth sensor element 13. It is obvious for a person skilled in the art, that the array sensor 3 may comprise less than four sensor elements 10, 11, 12, 13, or more than four sensor elements 10, 11, 12, 13.

A sensor signal 14 is transmitted in surroundings 15 of the array sensor 3 by the transmitting device 6 and reflected sensor signals 16 are received by the receiving device 7, wherein the sensor signal 14 is reflected on at least one calibration target 17, 18, 19, 20.

At least a direction of arrival of the reflected signal 16 is determined by the electronic computing device 8. A virtual position of each of the sensor elements 10, 11, 12, 13 is estimated depending on the direction of arrival by the electronic computing device 8 based on a criterion of a smallest residuum. The current positions 9 are estimated depending on the virtual positions and the initial positions estimated by the electronic computing device 8.

As shown in Fig. 1, at least four reflected sensor signals 16 from at least four calibration targets 17, 18, 19, 20 are received. In particular, Fig. 1 shows a first calibration target 17, a second calibration target 18, a third calibration target 19, as well as a fourth calibration target 20. Additionally a distance to the at least one calibration target 17, 18, 19, 20 is provided and the virtual position is additionally determined depending on the provided distance.

Furthermore, additionally depending on the estimated current positions 9 a channel imbalance of the sensor element 10, 11, 12, 13 are determined.

In another embodiment the channel imbalance is determined by using a singular value decomposition algorithm. Alternatively, the channel imbalance is determined by using a higher-order singular value decomposition.

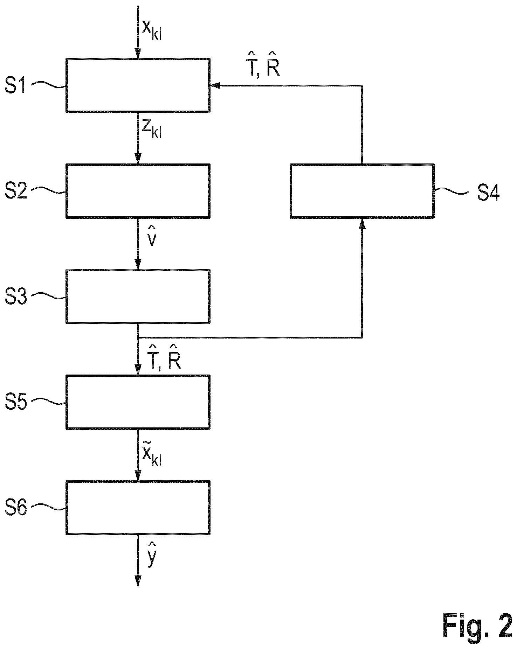

Fig. 2 shows a schematic flow chart according to an embodiment of the method. In particular, Fig. 2 shows in a first step S1 that data is normalized. In a second step S2 virtual positions are estimated. In a third step S3 the real positions are estimated. In a fourth step S4 the estimated positions are bootstrapped to the first step S1. Coming from the third step S3 a fifth step S5 is performed, wherein the data is compensated. In a sixth step S6 the channel imbalances are estimated.

In particular, Fig. 2 shows that in the first step S1 an element-wise division by data from selected reference channel and reference targets is performed, and a compensation of unwanted terms with "fudge factor" is performed. In a second step S2 the virtual positions are estimated. An analytic solution for each hypothesis of unwrapping that could have resulted in the measured phases is performed. The virtual positions are estimated based on the criterion of the smallest residuum. In the third step S3 the real positions are estimated. In particular a pseudo-inversion and a fix origin from prior knowledge of the sensor elements positions is used. Optional the fourth step S4 is performed, wherein the current estimates are bootstrapped as prior knowledge. In the fifth step S5 the data is compensated. Using the estimated positions and potentially accepted target model to eliminate the phase contribution due to geometry from the data is provided. In the sixth step S6 the channel imbalance is estimated. Applying SVD or HOSVD

Now, the steps S1 to S6 are presented in more detail. According to the first step S1 normalization of the data is provided.

An array consists of Tx $m = 1, ... , N_{Tx}$ and Rx $n = 1, ... , N_{Rx}$ with (3D Cartesian) positions $t_m, r_n \in \mathbb{R}^3$, respectively. Radar operates at wavelength $\lambda$.

Data model for range/Doppler snapshots: For Cartesian target location $p_k$,

$$x_{kl} = s_k \gamma_l \exp(i\frac{2\pi}{\lambda}(|p_k - t_m| + |p_k - r_n|))$$

where $k = 0,..., K$ targets and $l = (m,n) = 0,...,L$ virtual channels with position $v = \frac{t+r}{2}$. The complex channel imbalances are $\gamma_l$, while $s_k$ are the target amplitudes. Note that virtual positions are defined here as the mean, not just the sum, of Tx and Rx position. Note also there is no additive Gaussian noise in the model.

Select a virtual 'reference channel' (wlog, $l = 0$), which will also serve as coordinate origin $v_0 = 0$ in the following.

Divide now element-wise by the signal in the reference channel and compensate with the following (estimated) residual phases

$$y_{kl} := \exp\left(-i\frac{2\pi}{\lambda}\widehat{\Delta}_{kl}\right) \frac{x_{kl}}{x_{k0}}$$

$$\approx \exp\left(-i\frac{2\pi}{\lambda}\Delta_{kl}\right) \frac{x_{kl}}{x_{k0}}$$

$$= \frac{\gamma_l}{\gamma_0} \exp(i\frac{2\pi}{\lambda/2}(-u_k^H v_l + \frac{f_{kl}}{|p_k|}|v_l|^2))$$

where (omitting indices $k$, $l$,etc)

$$\Delta = |p - t| + |p - r| - (|p - t_0| + |p - r_0|) - 2(-u^H v + \frac{f}{|p|}|v|^2)$$

and $\hat{\Delta}$ analogously, with antenna positions (and in a potential extended version of the method also target locations) replaced with their priors. The target direction (DoA) is denoted by $u$.

Here a 'fudge factors' $f$ is introduced, which is usually set to

$$f = \frac{|p|}{4|\hat{v}|^2} \hat{v}^H(2u - u_t - u_r)$$

with

$$u_t = \frac{p - \hat{t}}{|p - \hat{t}|}, \qquad u_r = \frac{p - \hat{r}}{|p - \hat{r}|}$$

and $\hat{v}$ the prior on virtual position.

On the choice of fudge factors. There is probably more than one good rationale to set the fudge factors. Here, minimizing the (first order terms of) the RMSE under Gaussian perturbations of the ideal $\Delta$ and its practically available estimate, i.e.,

$$\hat{\Delta} - \Delta \approx \left(u_t - u + \frac{2f}{|p|}\hat{v}\right)^T \epsilon + \left(u_r - u + \frac{2f}{|p|}\hat{v}\right)^T \delta - (u_{t0} - u_{r0})^T \epsilon_0$$

with $t = \hat{t} + \varepsilon$, $r = \hat{r} + \delta$, with $\epsilon, \delta \sim N(0, \sigma_{pos}^2)$.

The result for $f$ is independent of the error variance $\sigma_{pos}^2$, whereas the RMSE scales linearly

$$E[(\hat{\Delta} - \Delta)^2]/\sigma_{pos}^2 = |u_{t0} - u_{r0}|^2$$
$$+ \left|u - u_t - P_{\hat{v}}\left(u - \frac{u_t + u_r}{2}\right)\right|^2$$
$$+ \left|u - u_r - P_{\hat{v}}\left(u - \frac{u_t + u_r}{2}\right)\right|^2$$

Here, $P_v = \frac{vv^H}{|v|^2}$ is the projection on $v$.

Note that the $\Delta$ can be estimated rather accurately even with only modest prior knowledge of antenna positions and target locations. For far-field targets, the RMSE converges to zero.

Another reasonable choice of fudge factors is

$$f = \frac{|\hat{t}|^2 - (u^H\hat{t})^2 + |\hat{r}|^2 - (u^H\hat{r})^2 - 2(|\hat{t}_0|^2 - (u^H\hat{t}_0)^2)}{|\hat{t} + \hat{r}|^2}$$

It is based on the observation that

$$\Delta = -\frac{2|v|^2}{|p|}f + \frac{|t|^2 - (u^Ht)^2 + |r|^2 - (u^Hr)^2 - 2(|t_0|^2 - (u^Ht_0)^2)}{2|p|} + O(\frac{1}{|p|}),$$

where $O()$ here refers to Landau's big-O notation (read: the term is negligible if the target is far enough from the array). Thus, the choice aims to eliminate the lowest order term with this choice.

Also very similar performance for the two choices can be observed, the former having possibly a slight edge over the latter in the near-field.

To avoid numerical instabilities for virtual channels near the origin (other than the reference channel), in one possible embodiment $f$ is set to zero for those channels if it would otherwise exceed some maximum value. (Possible criterion: $f \ll \lambda|p|/\sigma_{pos}^2 =: f_{max}$ where $\sigma_{pos}$ is typical position error.) Usually this should not be necessary, as arrays positions are designed such that they are spread over the aperture.

Choose further a 'reference target' (wlog, $k = 0$) and divide element-wise along the channel dimension to eliminate the channel imbalances

$$z_{kl} := \exp(i\phi_{kl}) := \frac{y_{kl}}{y_{0l}}$$

$$\approx \exp(i\frac{2\pi}{\lambda/2}(-(u_k - u_0)^H v_l + \left(\frac{f_{kl}}{|p_k|} - \frac{f_{0l}}{|p_0|}\right)|v_l|^2))$$

where again the last equation holds only approximate in the case of estimated $\triangle$.

This step can be skipped in case that channel imbalances have already been compensated, i.e. $\gamma_l$ = *const.* All the formulas remain valid with the obvious modifications, e.g., $f_0 = 0$, $u_0 = 0$, $K \rightarrow K + 1$.

In the second step S2 the virtual positions are estimated. For the normalized phases of $z_{kl}$, defined as

$$\xi := \frac{\phi}{2\pi}\frac{\lambda}{2} \in \left(-\frac{\lambda}{4}, \frac{\lambda}{4}\right],$$

There is the equation (indices *l* can be dropped since the problem is decoupled in the virtual positions $v_l$),

$$\left(\frac{f_k}{|p_k|} - \frac{f_0}{|p_0|}\right)|v|^2 - (u_k - u_0)^T v \in \xi_k + \frac{\lambda}{2}\,\mathbb{Z}, \qquad \text{for } k = 1, \ldots, K$$

In vector notation, introduce

$$h = \left(\frac{f_k}{|p_k|} - \frac{f_0}{|p_0|}\right)_k \in \mathbb{R}^K$$

$$U = (u_1 - u_0, \ldots, u_K - u_0) \in \mathbb{R}^{3 \times K},$$

$$A = (U^T)^+ = (UU^T)^{-1}U \in \mathbb{R}^{3 \times K},$$

$$Ah = cn, \qquad c = |Ah| > 0, \qquad n \in \mathbb{R}^3$$

(i.e., $c \rightarrow 0$ is far-field condition for fixed fudge factors) and the following formula is used:

$$hv^T v - U^T v \in \xi + \frac{\lambda}{2}\,\mathbb{Z}^K$$

or

$$Ahv^T v - v \equiv A\xi + \frac{\lambda}{2}A z =: \zeta_z \quad (Eq.\,1)$$

with $z \in \mathbb{Z}^K$ (which immediately may be drop ped as subindex from $\zeta$). This equation can be solved analytically, as shown in the following proof:

Derivation of analytic solution for (Eq.1). (Can be skipped on first reading.)

Now let $Q = (n, \tilde{Q}) \in SO(3)$. Recall that by definition of orthogonal matrices, we have $I_3 =$

$$QQ^T = nn^T + \tilde{Q}\tilde{Q}^T \text{ and } Q^TQ = [n^Tn, n^T\tilde{Q}; \tilde{Q}^Tn, \tilde{Q}^T\tilde{Q}) = (1, 0^T; 0, I_2).$$

With $w = Q^T v = (w_1; \tilde{w}) \in \mathbb{R}^3$, we have

$$c\,e_1 w^T w - w \in Q^T\zeta = (b_1; \tilde{b})$$

with

$$b_1 = n^T \zeta \in \mathbb{R}$$

and

$$\tilde{b} = \tilde{Q}^T \zeta \in \mathbb{R}^2$$

and

$$|\zeta|^2 = |Q^T \zeta|^2 = b_1^2 + \left|\tilde{b}\right|^2 = \zeta_{par}^2 + |\zeta_{orth}|^2$$

Stated equivalently,

$$w_1^2 - \frac{w_1}{c} + |\zeta_{orth}|^2 - \frac{\zeta_{par}}{c} = 0$$
$$-\tilde{w} = \tilde{b}$$

from which following formula can be found

$$w_1^{\pm} = \frac{1}{2c}\left(1 \pm \sqrt{\left(1 - 4c^2|\zeta_{orth}|^2 + 4c\zeta_{par}\right)}\right)$$

Apparently $w_1 := w_1^-$ must be the meaningful solution, as it gives results consistent with the far-field case

$$w_1^- \to -\zeta_{par}, \qquad c \to 0$$

while $w_1^+$ diverges.

In summary, the sought-after position estimate is given by the formula

$$\hat{v} = Q(w_1; -\tilde{b}) = w_1 n - \tilde{Q}\tilde{Q}^T \zeta = w_1 n - (I_3 - nn^T)\zeta$$

In the case $K = 3$, every $\zeta$ gives a valid solution (within the limits of prior knowledge). In the case $K > 3$, the residiuum

$$res(z) = \left| h|\hat{v}|^2 - U^T\hat{v} - \left(\xi + \frac{\lambda}{2}z\right) \right|$$

helps to discard 'pseudo solutions': a large residuum stems from comprises made by the pseudo-inverse (Eq.1), while a true solution should ideally have no residuum at all.

How exactly additional calibration targets increase the unambiguous cell depends on the precise location and seems difficult to describe.

In any case, one has to search over a grid in $\zeta$. Prior knowledge on $v_p$ gives an idea for a grid center

$$z_p = round\left(\frac{h|v_p|^2 - U^T v_p}{\lambda/2}\right) \in \mathbb{Z}^K$$

The method is 'exact' in the far-field case

$$\hat{v}(z) = -A\xi - \frac{\lambda}{2} A z$$

and depends on fudge factor estimate quality in the near-field case. The selection of fudge factors could be guided by an appropriate robustness criterion.

The method can be adapted in the spatial degrees of freedom. For example, if it is known that antenna positions can vary only in a 2D plane or the target configuration is degenerated such that position estimation along one axis is not reasonably possible, one can modify the position variables to

$$t = + a_0 + e_x t_x + e_y t_y$$

$$r = -a_0 + e_x r_x + e_y r_y$$

$$v = e_x v_x + e_y v_y = E\tilde{v}$$

and (Eq.1) takes the form

$$\tilde{A}h\, \tilde{v}^T \tilde{v} - \tilde{v} \equiv \tilde{\zeta}_z$$

$$\tilde{U} = E^T(u_1 - u_0, \ldots, u_K - u_0) \in \mathbb{R}^{2 \times K},$$

$$\tilde{A} = \left(\tilde{U}^T\right)^+ = \left(\tilde{U}\tilde{U}^T\right)^{-1}\tilde{U} \in \mathbb{R}^{2 \times K},$$

An analytic solution for $\tilde{v} \in \mathbb{R}^2$ can be found as in the general case.

In the third step S3 the real positions are estimated. Once that estimates $\hat{V} \in \mathbb{R}^{3 \times N_{Tx} N_{Rx}}$ have been found for all virtual positions, it remains to convert them back into estimates of real positions of Tx $\hat{T} \in \mathbb{R}^{3 \times N_{Tx}}$ and Rx $\hat{R} \in \mathbb{R}^{3 \times N_{Rx}}$.

The $(N_{Tx}N_{Rx} \times N_{Tx} + N_{Rx})$ matrix

$$M = [I_T \otimes 1_R, 1_T \otimes I_R]$$

(with $I_T \in \mathbb{R}^{N_{Tx} \times N_{Tx}}$ the identity matrix, and $1_R \in \mathbb{R}^{N_{Rx} \times N_{Rx}}$ the matrix of ones) yields the desired solution

$$\left(\hat{T}^T; \hat{R}^T\right) = M^+ 2\hat{V}^T \in \mathbb{R}^{(N_{Tx}+N_{Rx}) \times 3}$$

Adding some more rows to M is convenient for numerical stability and to fix another degree of freedom (note that shifting Rx and Tx arrays against each other leaves virtual positions unchanged). They can be used to set e.g. the array centers according to prior knowledge.

At this stage also trying to identify virtual positions estimates may be performed that fell into ambiguity traps. If there is a single combination of Tx/Rx that is an outlier with respect to the others, it will manifest in the residuum

$$2\hat{V}^T - M\left(\hat{T}^T; \hat{R}^T\right)$$

as unusual large values, maybe larger than a wavelength $\lambda$. We can then discard those rows and repeat the estimation of real positions for a probably much better overall result.

Next, the optional fourth step S4 may be performed, wherein bootstrapping with current estimates as prior knowledge is performed. Given now new current estimates of antenna positions $\hat{T}, \hat{R}$, the steps S1 to S3 can be repeated so far with these hopefully improved estimates as prior knowledge.

This kind of bootstrapping has potential to greatly increase accuracy if the performance on first run was already decent. On the other hand, first estimates that fell into an 'ambiguity trap' become consolidated further in the wrong position, which can result in an overall degeneration of estimation quality also for other channels.

In the fifth step S5 Compensating data is performed, in particular by using the estimated positions and potentially extended target model. With estimates of antenna positions, also estimates of bistatic ranges for each target of known location can be used. Going back to the original samples, compensating the phase due to geometry based on the antenna position estimates can be performed

$$\tilde{x}_{kl} := x_{kl} \exp\left(-i\frac{2\pi}{\lambda}(|p_k - \hat{t}_m| + |p_k - \hat{r}_n|)\right) \approx s_k \gamma_l \quad (Eq.\,2)$$

where the last equation holds only approximately. Even if it has not been used in the steps before yet, at least in this last equation it is advisable to make use of extended target models for refined compensation of e.g. cylinder shapes (cf. Alhazen's problem).

In the sixth step S6 estimating channel imbalances can be performed by using SVD or HOSVD to find rank-1 of approximation. Channel imbalances can now be estimated easily:

For a 'full' model without further structure

$$\min_{\gamma,s} \| \tilde{X} - s \otimes \gamma \|_F^2$$

the singular value decomposition (SVD) $\tilde{X} = U\Sigma V^H$ can be applied and the first column of $U$ (corresponding to the largest singular value) as estimate for $\gamma$. (With a single target, this is just 'conventional' calibration routine) can be extracted.

For a 'Kronecker' model with structure (as appropriate for MIMO radar)

$$\min_{\alpha,\beta,s} \| \tilde{X} - s \otimes \alpha \otimes \beta \|_F^2$$

the higher order SVD for a refined estimate can be applied.

**Reference signs**

| 1 | motor vehicle |
|---|---|
| 2 | assistance system |
| 3 | array sensor |
| 4 | sensing device |
| 5 | communication device |
| 6 | transmitting device |
| 7 | receiving device |
| 8 | electronic computing device |
| 9 | current position |
| 10 | first sensor element |
| 11 | second sensor element |
| 12 | third sensor element |
| 13 | fourth sensor element |
| 14 | sensor signal |
| 15 | surroundings |
| 16 | reflected sensor signal |
| 17 | first calibration target |
| 18 | second calibration target |
| 19 | third calibration target |
| 20 | fourth calibration target |
| S1 - S6 | steps of the method |

**Claims**

1. A method for estimating current positions (9) of sensor elements (10, 11, 12, 13) in an array sensor (3), comprising the steps of:

   - Providing initial position estimates of the sensor elements (10, 11, 12, 13) by an electronic computing device (8) of the array sensor (3);
   - Transmitting a sensor signal (14) in surroundings (15) of the array sensor (3) by a transmitting device (6) of the array sensor (3) and receiving a reflected sensor signal (16) by a receiving device (7) of the array sensor (3), wherein the sensor signal (14) is reflected on at least one calibration target (17, 16, 18, 19) in the surroundings (15);
   - Determining at least a direction of arrival of the reflected signal (16) by the electronic computing device (8);
   - Estimating a virtual position of each of the sensor elements (10, 11, 12, 13) analytically depending on the direction of arrival by the electronic computing device (8) based on a criterion of smallest residuum; and
   - Estimating the current positions (9) depending on the virtual positions and the initial position estimates by the electronic computing device (8).

2. A method according to claim 1,
   **characterized in that**
   at least four reflected signals (16) from at least four calibration targets (17, 18, 19, 20) are received.

3. A method according to claim 1 or 2,
   **characterized in that**
   additionally a distance to the at least one calibration target (17, 18, 19, 20) is provided and the virtual position is additionally determined depending on the provided distance.

4. A method according to any one of claims 1 to 3,
   **characterized in that**
   additionally depending on the estimated current positions (9) a channel imbalance of the sensor elements (10, 11 ,12, 13) are determined.

5. A method according to claim 4,
   **characterized in that**
   the channel imbalance is determined by using a singular value decomposition algorithm.

6. A method according to claim 4,
   **characterized in that**
   the channel imbalance is determined by using a higher-order singular value decomposition algorithm.

7. A method according to any one of claims 1 to 6,
   **characterized in that**
   the initial positions are nominal positions.

8. A method according to any one of claims 1 to 7,
   **characterized in that**
   the estimated virtual positions are bootstrapped as the initial positions.

9. A method according to any one of claims 1 to 8,
   **characterized in that**
   before estimating the virtual positions the received signal (16) is normalized.

10. A method according to any one of claims 1 to 9,
    **characterized in that**
    before estimating the current positions (9) the received signal (16) is filtered concerning outliers in the received signal (16).

11. A method according to any one of claims 1 to 10,
    **characterized in that**

the received signal (16) is compensated concerning a phase contribution due to geometry from the received signal (16).

12. A method according to any one of claims 1 to 10,
    **characterized in that**
    the array sensor (3) is provided as a radar device and/or a communication device (5).

13. A computer program product comprising program code means for performing a method according to any one of claims 1 to 12.

14. A computer-readable storage medium comprising at least the computer program product according to claim 13.

15. An array sensor (3) configured as a sensor device (4) and/or a communication device (5) for a motor vehicle (1), comprising at least one transmitting device (6), one receiving device (7), and one electronic computing device (8), wherein the array sensor (3) is configured for performing a method according to any one of claims 1 to 12.

Fig. 1

$x_{kl}$

S1

$\hat{T}, \hat{R}$

$z_{kl}$

S2

S4

$\hat{v}$

S3

$\hat{T}, \hat{R}$

S5

$\tilde{x}_{kl}$

S6

$\hat{y}$

**Fig. 2**

Europäisches
Patentamt

European
Patent Office

Office européen
des brevets

# EUROPEAN SEARCH REPORT

Application Number

EP 23 19 3743

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2021 117909 A1 (VALEO SCHALTER & SENSOREN GMBH [DE]) 12 January 2023 (2023-01-12) * paragraphs [0005] – [0013], [0017], [0022] – [0040], [0069], [0071], [0086] – [0112]; figures 1-4 * | 1-3,7,8, 10,12-15 | INV. G01S7/40 G01S13/00 G01S13/87 G01S13/931 |
| X | US 2018/284220 A1 (BILIK IGAL [IL] ET AL) 4 October 2018 (2018-10-04) * paragraphs [0001], [0002], [0021], [0031], [0033]; figures 1-4 * | 1-3,7,8, 10,12-15 | |

TECHNICAL FIELDS SEARCHED (IPC)

G01S

The present search report has been drawn up for all claims

| Place of search | Date of completion of the search | Examiner |
|---|---|---|
| Munich | 19 December 2023 | Schmelz, Christian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

Europäisches
Patentamt

European
Patent Office

Office européen
des brevets

---

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

---

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-3, 7, 8, 10, 13, 14(completely); 12, 15(partially)

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION**
**SHEET B**

Application Number

**EP 23 19 3743**

The Search Division considers that the present European patent application does not comply with the requirements of unity of invention and relates to several inventions or groups of inventions, namely:

1. claims: 1-3, 7, 8, 10, 13, 14(completely); 12, 15(partially)

   Determination of sensor mounting position via direction (angle/azimuth) measurements to calibration objects.
   Problem solved: automated sensor position determination / allocation.
   ---

2. claims: 4-6, 9

   Determination / compensation of a channel imbalance of sensor elements.
   Problem solved: normalisation of received signals.
   ---

3. claim: 11

   The received signal (16) is compensated concerning a phase contribution due to geometry from the received signal.
   Problem solved: phase calibration of received signals.
   ---

4. claims: 12, 15(all partially)

   Communication device.
   Problem solved: provide a sensor function to a communication device (or vice versa).
   ---

**ANNEX TO THE EUROPEAN SEARCH REPORT
ON EUROPEAN PATENT APPLICATION NO.**                **EP 23 19 3743**

This annex lists the patent family members relating to the patent documents cited in the above-mentioned European search report.
The members are as contained in the European Patent Office EDP file on
The European Patent Office is in no way liable for these particulars which are merely given for the purpose of information.

19-12-2023

| Patent document cited in search report | Publication date | Patent family member(s) | | Publication date |
|---|---|---|---|---|
| DE 102021117909 A1 | 12-01-2023 | CN | 117716259 A | 15-03-2024 |
| | | DE | 102021117909 A1 | 12-01-2023 |
| | | WO | 2023285141 A1 | 19-01-2023 |
| US 2018284220 A1 | 04-10-2018 | CN | 108663664 A | 16-10-2018 |
| | | DE | 102018106841 A1 | 04-10-2018 |
| | | US | 2018284220 A1 | 04-10-2018 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2002344223 A1
- US 11005580 B2
- US 7714776 B2